# EUROPÄISCHE PATENTSCHRIFT

(11) **EP 1 345 686 B1**
(45) Veröffentlichungstag und Bekanntmachung des Hinweises auf die Patenterteilung: **30.06.2004**
(21) Anmeldenummer: 01990570.2
(22) Anmeldetag: 17.12.2001
(51) Int. Cl.: B01J 19/28, C08J 11/16

(54) **VORRICHTUNG ZUM REINIGEN UND/ODER DEKONTAMINIEREN VON POLYESTER**
DEVICE FOR PURIFYING AND/OR DECONTAMINATING POLYESTER
DISPOSITIF DE PURIFICATION ET / OU DE DECONTAMINATION DE POLYESTER

(30) Priorität: 15.12.2000 EP 00127589
(43) Veröffentlichungstag der Anmeldung: 24.09.2003
(73) Patentinhaber: Cleanaway Deutschland AG & Co.KG, 20457 Hamburg (DE)
(72) Erfinder: EBEL, Achim, 18055 Rostock (DE); GUTIERREZ, Carlos, Dario, Spartanburg, SC 29302 (US)
(74) Vertreter: Meier, Frank
(86) Internationale Anmeldenummer: PCT/EP2001/014882
(87) Internationale Veröffentlichungsnummer: WO 2002/047810

(56) Entgegenhaltungen:
- WO-A-00/18830
- DE-A- 2 056 389
- FR-A- 1 457 472
- US-A- 3 424 561
- US-A- 4 123 850
- US-A- 4 439 141
- US-A- 6 136 285

## Beschreibung

Die vorliegende Erfindung betrifft eine Vorrichtung zum Reinigen und/oder Dekontaminieren von Polyester, insbesondere von Polyethylentherephthalat (im folgenden PET genannt). Bei PET handelt es sich um eines der am meisten verwendeten Polyester. PET wird vielfältig verwendet, findet jedoch vor allem in der Getränkeindustrie als Material für Getränkeflaschen Verwendung.

Um insbesondere bei Getränkeflaschen das verwendete PET auch nach Gebrauch der Flaschen und/oder Kontamination der Flaschen wieder verwenden zu können, sind im Stand der Technik Verfahren entwickelt worden, die ein Recycling von Polyester ermöglichen. Nach diesem Recycling kann das gereinigte bzw. dekontaminierte Polyester oder PET wieder für die Herstellung beispielsweise von Getränkeflaschen verwendet werden.

Derartige Verfahren sind beispielsweise in der PCT/US99/23206 offenbart. Bei diesen bekannten Verfahren wird das zu wiederaufzubereitende PET zunächst in kleine Flocken zerkleinert. Anschließend wird das zerkleinerte PET in Wasser gegeben, um leichtere Materialien, wie Papier u.dgl. von dem PET durch Abschöpfen von der Wasseroberfläche trennen zu können. Anschließend wird das PET durch Hitzeeinwirkung getrocknet. Nach der Trocknung wird das zu behandelnde PET mit einem alkalischen Material vermischt. Auch dieses Gemisch wird durch Hitze getrocknet. in dem sich anschließenden zentralen Reaktionsschritt wird das derart mit alkalischem Material vermischte und getrocknete PET unter ständiger weiterer durch Hitze bewirkter Trocknung teilweise verseift. Anschließend werden die durch die Verseifung entstandenen Reaktionsprodukte getrennt, wodurch auch gereinigtes PET gewonnen wird.

Um eine befriedigende Ausbeute von recyceltem PET durch das vorgenannte Verfahren zu erhalten, ist es erforderlich, dass der zentrale Reaktionsschritt im wesentlichen in einer wasserfreien Umgebung stattfindet. Die aus dem Stand der Technik bekannten, für diesen zentralen Reaktionsschritt verwendeten Drehöfen, wie etwa der Rotary Calciner von der Firma Heyl & Patterson Inc., sind jedoch nur bedingt in der Lage, derartige Bedingungen zur Verfügung zu stellen.

Aus der DE-A-2056389 ist ein Drehrohrreaktor bekannt, bei dem das Reaktionsgut auf einem kontrollierten Stand gehalten wird. Dies geschieht durch ein feststehendes Wehr, welches entweder als Rand einer auftrittsseitig angeordneten Schale oder als am Austrittsende im Schüttungsbereich über eine verstellbare Führung angebrachter Schild gestaltet ist. Das feststehende Wehr weist eine Durchtrittsöffnung als Zwischenraum zwischen Schild und dem Rand der Ofen-Austrittsöffnung auf und ist geeignet, den Füllungsgrad des Drehrohrofens zu variieren.

Aufgabe der vorliegenden Erfindung ist es daher, eine Vorrichtung der eingangs genannten Art zu verbessern, insbesondere so weiterzubilden, dass diese in der Lage ist, eine im wesentlichen wasserfreie Umgebung zur Durchführung derartiger Verfahren zur Verfügung zu stellen.
Diese Aufgabe wird erfindungsgemäß durch eine Vorrichtung gemäß Anspruch 1 gelöst.
Die Erfindung garantiert maximale Flexibilität des Drehrohrofens und somit optimale Anpassung der Stauwirkung des Wehrs an die Gemischmenge und -art. Die Durchtrittsöffnungen oder auch weitere Perforationen in dem Wehr verhindern auch, dass sich in dem Gemisch durch die Verseifung entstandene Salze übermäßig an dem Wehr anstauen und so die Reaktion und/oder den Austransport der Reaktionsprodukte behindern.

Die Vorteile der Erfindung liegen auch darin, dass durch das innerhalb des Drehrohrofens, das Innere des Drehrohrofens zumindest teilweise verschließende Wehr eine konstante Verweilzeit des Gemisches in dem Drehrohrofens gewährleistet ist, die unabhängig von der Durchsatzleistung des Drehrohrofens ist. Dies hat wiederum zu folge, dass das Gemisch immer mit den gleichen Prozessparametern, wie Temperatur und Grad der Trockenheit, beaufschlagt in dem Drehrohrofen reagiert. Es können somit bei jeder Durchsatzmenge die für die maximale Ausbeute an wiederaufbereitetem Polyester notwendigen Prozessparameter eingehalten werden.
Vorteilhaft ist, wenn das Wehr im Bereich des stromabwärts gelegenen Endes des beheizten Ofenbereiches angeordnet ist. Hier kommt die Wirkung des Wehrs optimal zur Geltung, da die gesamte Länge des beheizten Bereiches des Drehrohrofens beeinflusst wird.
Vorteilhaft ist, wenn das Wehr 10 bis 14, weiter bevorzugt 12, sternförmig von der Mitte des Wehrs ausgehende Durchtrittsöffnungen aufweist. Auf diese Weise wird ein Definieren des Durchtrittsquerschnittes für das Gemisch ermöglicht.
Bevorzugt ist, wenn die Durchtrittsöffnungen derart zumindest teilweise mit den Abdeckungen abdeckbar sind, dass sie den Füllungsgrad des Drehrohrofens durch Variation der Aufstauwirkung des Wehrs von 0 % bis etwa 50 % variieren.
Besonders bevorzugt ist es, wenn der Drehrohrofen in seinem Inneren einen im wesentlichen zylinderförmigen Hohlraum zur Aufnahme des Gemisches bildet. Dabei ist es bevorzugt, wenn der Drehrohrofen auf seiner Innenoberfläche mindestens eine axial ausgerichtete Leiste aufweist. Diese Leisten leisten einen essentiellen Beitrag zur Verbesserung des Drehrohrofens gegenüber Öfen aus dem Stand der Technik. Diese Leisten verhindern einen Überschlag des Gemisches in dem Drehrohrofen. Dabei liegt z.B. PET-Mahlgut in dem Gemisch in fester Form vor. Auf der Oberfläche des Mahlgutes befindet sich auf/eingetrocknete Natronlauge. Während der Reaktion des Mahlgutes mit der Natronlauge bilden diese beiden Reagenzien zwei weitere Nebenprodukte, ein Salz in fester Form, sowie Ethylenglykol in gasförmiger Form. Bei Drehung des Ofens neigt dieses Gemisch dazu, sich in dem Ofen zu überschlagen. Durch den Überschlag des Gemisches in dem Ofen wird Staub freigesetzt, der sich durch das Aneinanderreiben der Mahlgutpartikel bildet. Diese aus dem Stand der Technik bekannte Staubentwicklung ist jedoch aus den im folgenden dargestellten Gründen sehr nachteilig:

Durch den permanenten Wasserentzug im Drehrohrofen entsteht ein Feuchtigkeitsgefälle im Drehrohrofen; zu Beginn, also etwa auf Höhe des Produkteinlaufs, ist die Feuchte höher als zum Ende des Drehrohrs, also etwa auf Höhe des Produktauslaufs. Entgegengesetzt zu diesem Verlauf verhält sich die Staubbildung im Drehrohrofen. Wird stark entwässerter Staub am Ende des Ofens aufgewirbelt, so wird dieser durch die Abluftführung nach vorne transportiert. Der Staub reagiert mit der Natronlauge und trägt diese durch die Abluftführung aus, da durch den Staub Wasser aufgenommen wird. Insgesamt kommt es so zu einer Dämpfung der Oberflächenreaktion des alkalischen Materials an dem Polyester, da diese Reaktion nur ohne Wasser optimal abläuft, wodurch wiederum eine nachteilige Verringerung der Ausbeute an gereinigtem Polyester zu beklagen ist.

Die erfindungsgemäßen Leisten verhindern jedoch den Überschlag des Gemisches und eliminieren somit die Wasseraufnahme bzw. Natronlaugeaufnahme durch den Staub in dem Ofen und erhöhen daher die Ausbeute an gereinigtem Material.

Vorteilhaft ist, wenn 5 bis 20, bevorzugt 12, entlang des Umfanges gleichmäßig verteilte, axiale Leisten vorgesehen sind. So wird auf dem gesamten Innenumfang ein Überschlag des Gemisches konstant verhindert.

Weiter vorteilhaft ist, wenn die mindestens eine axial ausgerichtete Leiste sich derart weit radial nach innen in den Innenraum des Drehrohrofens erstreckt, das im gesamten Drehzahlbereich des Drehrohrofens ein Überschlag des Gemisches in dem Drehrohrofen sicher verhindert wird.

Vorteilhaft ist, wenn der Drehrohrofen einen Durchmesser von 2 m bis 4 m, bevorzugt 2,6 m, und eine beheizte Länge von 15 m bis 25 m, bevorzugt 18 m, aufweist. So lassen sich die notwendigen Reaktionszeiten von über 2 Stunden realisieren.

Bevorzugt ist, wenn der Drehrohrofen zur Aufnahme des Gemisches einen Gemischeinlaufzylinder mit einem Durchmesser von 0,5 m bis 1,5 m, bevorzugt 0,8 m, aufweist. Dabei ist es vorteilhaft, wenn der Drehrohrofen zur Ausgabe des Gemisches einen Gemischauslaufzylinder mit einem Durchmesser von 1 m bis 3 m, bevorzugt 1,8 m, aufweist. Beide Bemaßungen passen insbesondere zu der obigen Gesamtlänge des Ofens.

Bevorzugt ist, wenn der Gemischeinlaufzylinder und/oder der Gemischauslaufzylinder mit einem konischen Übergang mit dem Drehrohrofen verbunden ist.

Vorteilhaft ist, wenn der Drehrohrofen innerhalb des Gemischauslaufzylinders Zwangsförderelemente, z.B. Förderspiralen, zur Förderung des Gemisches aufweist, um bei einer vorteilhaften Verjüngung des Rohrs im Bereich der Dichtung des Gemischauslaufzylinders einen Materialstau zu verhindern und eine gleichmäßige Förderung des Gemisches zu garantieren.

Bevorzugt ist, wenn an den Enden des Gemischeinlaufzylinders und/oder des Gemischauslaufzylinders Flansche zur Aufnahme von Abdichtungen zur luftdichten Abdichtung des Ofens angeordnet sind. Diese Abdichtungen sind besonders wichtig, da sie verhindern, dass Wasser oder Feuchtigkeit in den Ofen gelangt. Sie erhöhen daher ebenfalls die Ausbeute. Besonders an dem Auslaß ist die Dichtung wichtig, da dort bei Feuchtigkeitseintritt eine Depolymerisation des Produktes auftreten würde.

Bevorzugt ist, wenn der Drehrohrofen in seinem Inneren, bevorzugt etwa sechs, Schöpftaschen aufweist, welche das Produkt den auslaufseitigen Konus in den Gemischauslaufzylinder hinauffördem, insbesondere wenn eine reibungslose Zwangsförderung stattfindet.

Vorteilhaft ist, wenn der Drehrohrofen zum mechanischen Transport des Gemisches eine Neigung gegenüber der Horizontalen aufweist. Die Neigung sorgt zumindest auch für den Transport des Gemisches durch den Ofen.

Vorteilhaft ist, wenn der Drehrohrofen an einem ausfallseitigen Ende ein Schwenklager aufweist, so dass der Drehrohrofen durch einfallseitiges Anheben und Verschwenken des Drehrohrofens um dieses Schwenklager in die Neigung verschwenkbar ist.

Bevorzugt ist, wenn die Neigung 10 mm/m bis 20 mm/m, bevorzugt 15 mm/m, beträgt. Bei diesen Neigungswerten werden die optimalen Gemischgeschwindigkeiten in dem Ofen erzielt.

Bevorzugt ist, wenn innerhalb des Drehrohrofens, bevorzugt 5 bis 20, weiter bevorzugt 10, Thermoelemente zur Überwachung der Gemischtemperatur in dem Drehrohrofen vorgesehen sind, welche Thermoelemente an einem relativ zu dem Drehrohrofen feststehenden Messbalken innerhalb des Drehrohrofens befestigt sind. Damit kann die gewünschte Reaktionstemperatur in dem Ofen genau überwacht und ggf. gesteuert werden.

Bevorzugt ist, wenn pro Heizzone zwei Thermoelemente vorgesehen sind. So ist eine Steuerung individuell für jedes Heizelement möglich.

Vorteilhaft ist, wenn an einem axialen Punkt des Drehrohrofens jeweils zwei Thermoelemente vorgesehen sind, die unterschiedlich beabstandet zur Drehachse des Drehrohrofens innerhalb des Drehrohrofens vorgesehen sind. Diese rechenartige Anordnung der Sensoren in dem Ofen lässt eine Überwachung der Temperatur in verschiedenen Tiefen des reagierenden Gemisches zu, da die Thermoelemente unterschiedlich tief in das Gemisch hineinragen.

Vorteilhaft ist, wenn der Drehrohrofen 2 bis 5, bevorzugt drei, Prozesszonen entlang seiner Längsachse aufweist Somit lassen sich in einem Ofen verschiedene Prozessschritte abarbeiten.

Vorteilhaft ist, wenn die Ausgestaltung, die Länge und die Temperatur der ersten Prozesszone derart ist, dass eine weitere Vortrocknung des Gemisches vomehmbar ist, bevorzugt von 0,8 % bis 0,2 %, bevorzugt 0,4 %, Wassergehalt auf 100 ppm bis 50 ppm, bevorzugt 80 ppm, Wassergehalt.

Bevorzugt ist, wenn die Ausgestaltung, die Länge und die Temperatur der zweiten Prozesszone derart ist, dass eine Oberflächenreaktion zur teilweisen Verseifung des Gemisches stattfindet.

Vorteilhaft ist, wenn die Ausgestaltung, die Länge und die Temperatur der dritten Prozesszone derart ist, dass eine Diffusionsreaktion zur Entfernung von aromatischen Verunreinigungen in dem Gemisch stattfindet.

Bevorzugt ist, wenn in dem Drehrohrofen mindestens drei, bevorzugt fünf, weiter bevorzugt gleichlange, Heizzonen vorgesehen sind. Hierdurch kann für jeden Ofenabschnitt sehr genau die gewünschte Temperatur in dem Ofen eingestellt werden.

Vorteilhaft ist, wenn außerhalb des Drehrohrofens angeordnete Heizstrahler vorgesehen sind, mit deren Hilfe der Drehrohrofen von außen beheizbar ist, so dass eine indirekte Beheizung des Gemisches in dem Drehrohrofen erzeugbar ist.

Bevorzugt ist, wenn der Drehrohrofen eine Heißluftöffnung zum Einströmen von Heißluft in das Innere des Drehrohrofens aufweist, bevorzugt eine zweite Öffnung zum Ausströmen der verbrauchten Heißluft aufweist.

Bevorzugt ist, wenn ein Heißlufterzeuger zum Erzeugen der Heißluft vorgesehen ist, deren Temperatur der Temperatur im Inneren des beheizten Drehrohrofens im wesentlichen entspricht. Auf diese Weise wird ein Temperaturgefälle beim Eintreten der Luft in das Innere des Ofens vermieden.

Bevorzugt ist, wenn ein Heißlufttrockner zum Trocknen der für das Innere des Drehrohrofens vorgesehenen Heißluft vorgesehen ist. So kann auch die Heißluft keine schädliche Feuchtigkeit in den Ofen tragen.

Vorteilhaft ist, wenn in dem Drehrohrofen eine, bevorzugt aus, weiter bevorzugt trockener, Heißluft bestehende, Gegenluftströmung entgegen der Bewegungsrichtung des Gemisches mit Hilfe eines Gebläses erzeugbar ist. Durch die Einrichtung des Gebläses derart, dass die Luft entgegen der Bewegung des Gemisches in dem Ofen strömt, gelangt immer maximal saubere und trockene Heißluft an den bereits gereinigtes Polyester enthaltenen Endabschnitt des Ofens, so dass dieses wertvolle Produkt optimal vor Feuchtigkeitseinflüssen geschützt wird.

Vorteilhaft ist, wenn ein Mischer zum Mischen des Gemisches vor Eintritt in den Drehrohrofen vorgesehen ist, welcher Mischer bevorzugt eine geheizte Mischschnecke aufweist. So wird auch ein Temperaturgefälle des Gemisches beim Eintritt in den Ofen vermieden.

Vorteilhaft ist, wenn dem Mischer ein Vortrockner zum Trocknen des für den Mischer vorgesehenen Polyesters verschaltet ist Auch hierdurch wird der Eintritt von schädlicher Feuchtigkeit in den Ofen verhindert.

Vorteilhaft ist, wenn die Heizleistung des Vortrockners zur Trocknung des Inhalts des Vortrockners größer ist als die Lüftungsleistung des Vortrockners zur Trocknung des Inhalts des Vortrockners. Dies verhindert, dass unreagierte Natronlauge abgeführt wird.

Vorteilhaft ist, wenn in dem Vortrockner eine Gegenluftströmung gegen die Bewegungsrichtung des zu trocknenden Gutes in dem Vortrockner erzeugbar ist.

Weitere bevorzugte Ausführungsbeispiele der Erfindung sind in den Unteransprüchen angegeben.

Ein Ausführungsbeispiel der erfindungsgemäßen Vorrichtung wird nun anhand der Zeichnung beschrieben.

Die Zeichnung zeigt:
- Fig. 1: eine Seitenansicht eines Drehrohrofens;
- Fig. 2: das Wehr des Drehrohrofens der Fig. 1 in einer Frontalansicht;
- Fig. 3: eine schematische Seitenansicht der Vorrichtung mit dem Drehrohrofen der Fig. 1;
- Fig. 4: die Ansicht der Fig. 1 mit schematisch dargestellten Thermoelementen;
- Fig. 5: eine Detailansicht zweier Thermoelemente einer Heizzone;
- Fig. 6: eine schematische Detailansicht der Leisten in dem Drehrohrofen der Fig. 1;
- Fig. 7: eine schematische Detailansicht von Öffnungen in dem Drehrohrofen der Fig. 1; und
- Fig. 8: eine schematische Detailansicht von Bürsten in dem Drehrohrofen der Fig. 1.

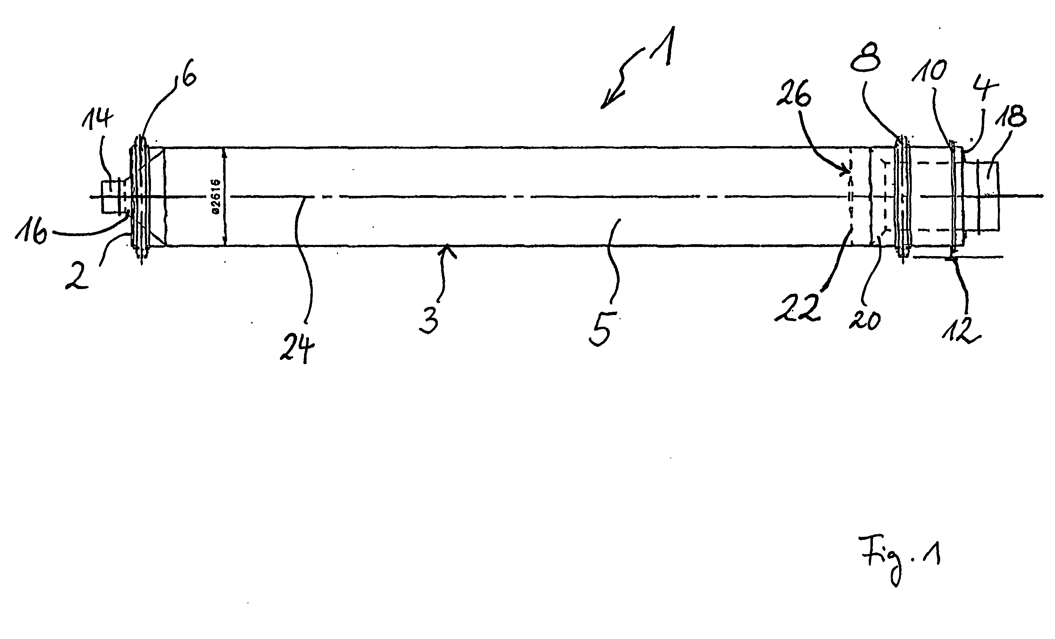

Fig. 1 zeigt eine Seitenansicht eines Drehrohrofens 1. Der Drehrohrofen 1 weist einen zylinderförmigen Mantel 3 auf und ist mit im Bereich seiner Stirnseiten 2 bzw. 4 vorgesehenen Laufkränzen 6 bzw. 8 auf nicht dargestellten Lagern drehbar gelagert Der Mantel 3 umschließt einen Produktraum 5 zur Aufnahme des nicht dargestellten, aufzubereitenden Gemisches.

Die Stirnseite 4 bildet das auslaufseitige Ende und die Stirnseite 2 bildet das einlaufseitige Ende des Drehrohrofens 1. Antreibbar ist der Drehrohrofen 1 über einen im Bereich der Stirnseite 4 vorgesehenen Zahnkranz 10, der von einem von einem nicht dargestellten Motor angetriebenen Zahnkranzritzel 12 angetrieben wird. Die Drehzahl des Drehrohrofens 1 lässt sich zwischen 0,5 und 5,0 U/min einstellen.

Einlaufseitig weist die Stirnseite 2 eine koaxiale, zylinderförmige Verlängerung 14 auf. Diese dient dem Drehrohrofen 1 als Gemischeinlauf für das Gemisch. Die Verlängerung 14 weist einen geringeren Durchmesser als der Mantel 3 auf und ist mit dem Mantel 3 über ein konusförmiges Verbindungsstück 16 verbunden.

Auslaufseitig weist die Stirnseite 4 ebenfalls eine koaxiale, zylinderförmige Verlängerung 18 auf. Diese dient dem Drehrohrofen 1 als Gemischauslauf für das wiederaufbereitete Gemisch. Die Verlängerung 18 weist einen geringeren Durchmesser als der Mantel 3 jedoch einen größeren Durchmesser als die einlaufseitige Verlängerung 14 auf und ist mit dem Mantel 3 über ein konusförmiges Verbindungsstück 20 verbunden, welches aufgrund des gegenüber der Einlaufseite geringeren Durchmesserunterschiedes zwischen der Verlängerung 18 und dem Mantel 3 bei gleicher Steigung kürzer ist als das Verbindungsstück 16 an der Stirnseite 2.

Im Bereich der auslaufseitigen Stirnseite 4, jedoch in Bewegungsrichtung des Gemisches noch vor dem Verbindungsstück 20, ist eine sternförmige Wehr 22 vorgesehen. Diese Wehr 22 erstreckt sich radial von der Drehachse 24 des Drehrohrofens 1 von innen an den Mantel 3. In der Wehr 22 sind Durchtrittsöffnungen 26 für das Gemisch vorgesehen.

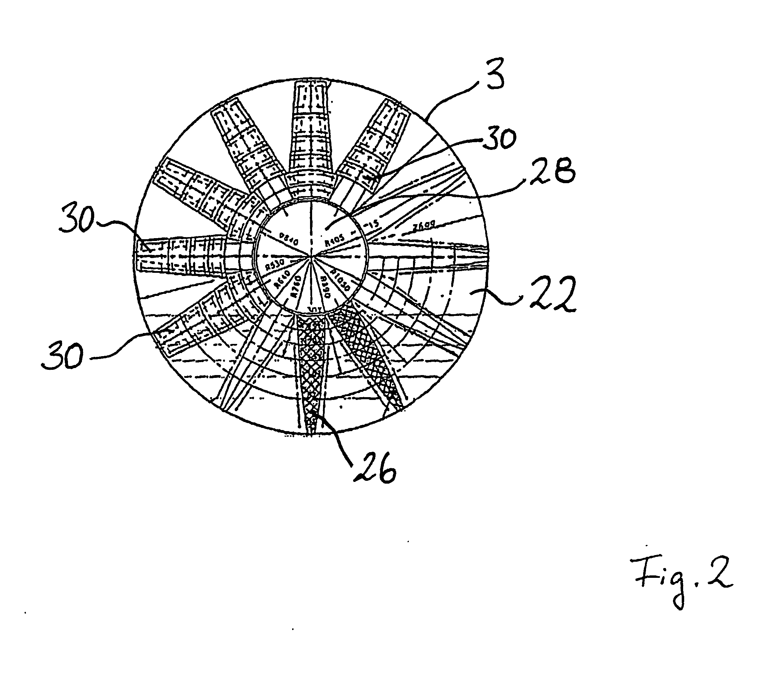

Fig. 2 zeigt das Wehr 22 des Drehrohrofens 1 der Fig. 1 in einer Frontalansicht. Die Fig. 2 zeigt 12 sternförmig von einem geschlossenen Mittelbereich 28 ausgehende Durchtrittsöffnungen 26 in dem Wehr 22. Die Öffnungen 26 lassen sich mit Hilfe von Abdeckblechen 30 individuell verschließen.

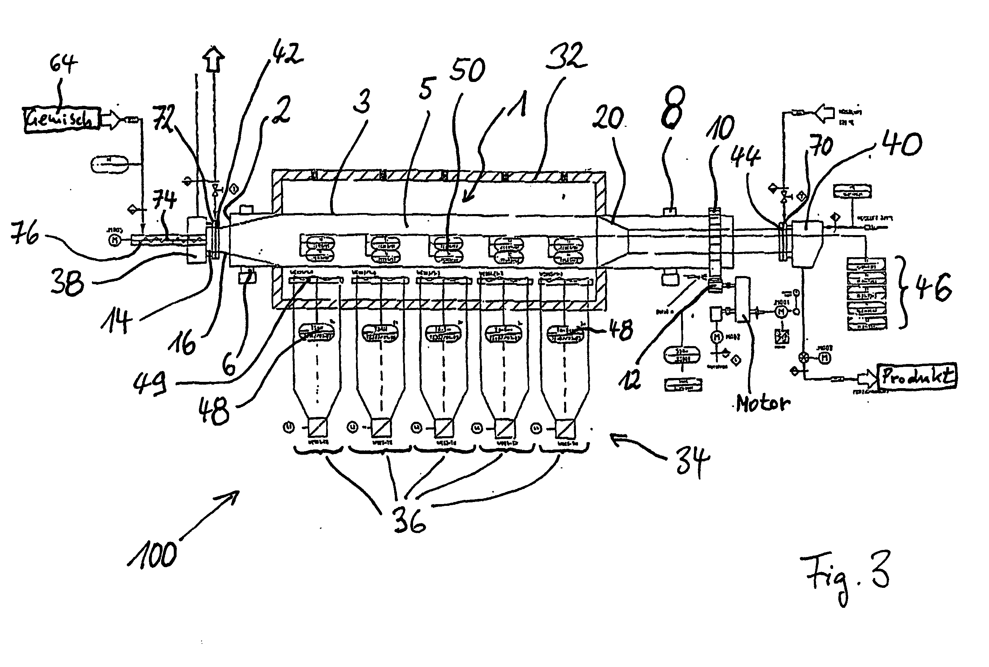

Fig. 3 zeigt eine schematische Seitenansicht der Vorrichtung 100 mit dem Drehrohrofen 1 der Fig. 1. Teile, die denen der Fig. 1 und 2 entsprechen, sind mit den gleichen Bezugszeichen bezeichnet.

Darüber hinaus zeigt die Fig. 3 folgendes:

Einen den Drehrohrofen 1 umgebenden Heiztunnel 32 mit einer elektrischen Beheizungseinrichtung 34, welcher den Ofenmantel 3 axial umschließt. Der Heiztunnel 32 rotiert nicht mit und ist mit 5 getrennt regelbaren Heizzonen 36 ausgerüstet. Jede Heizzone 36 weist einen eigenen Heizstrahler 49 auf, der den Mantel 3 des Drehrohrofens 1 von außen mit Hitze bestrahlt.

Ein- 38 und Ausfall- 40 -Gehäuse, welche den (vom Ofenmantel 3 gebildeten) Produktraum 5 jeweils stirnseitig abschließen. Beide Gehäuse 38 und 40 sind stationär.

Ein- und ausfallseitige Burgmann-Dichtungen 42 und 44, welche den Produktraum 5 zwischen dem drehenden Ofenmantel 3 und den stationären Ein- und Ausfallgehäusen 38 und 40 abdichten.

Instrumente zur Messung der Produkttemperaturen 46 und der Manteltemperaturen 48, jeweils vorhanden für jede Temperaturregelzone 36. Die Instrumente zur Messung der Produkt- bzw. Gemischtemperaturen weisen in dem Produktraum stationäre Thermoelemente 50 auf. Es sind jeweils zwei Thermoelement 50 pro Heizzone 36 vorgesehen.

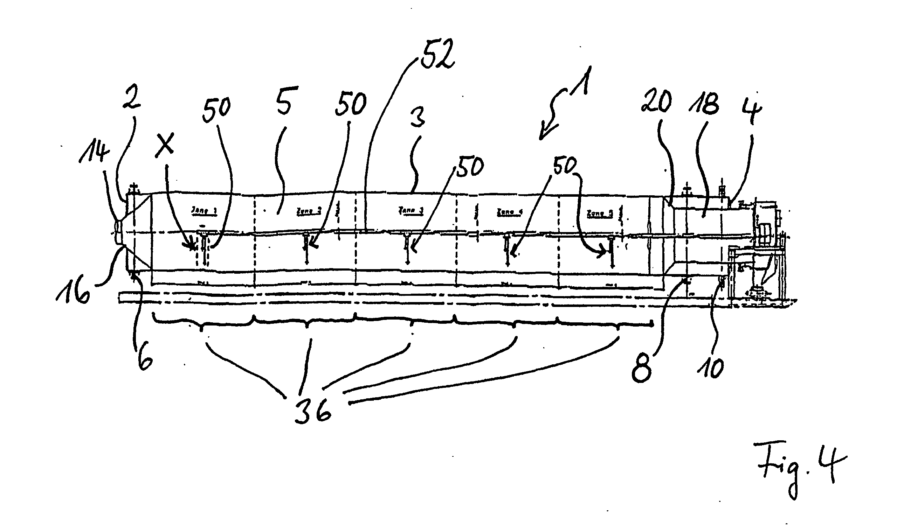

Fig. 4 zeigt die Ansicht der Fig. 1 mit schematisch dargestellten Thermoelementen 50. Die Thermoelemente sind an einem zentralen Messbalken 52 befestigt.

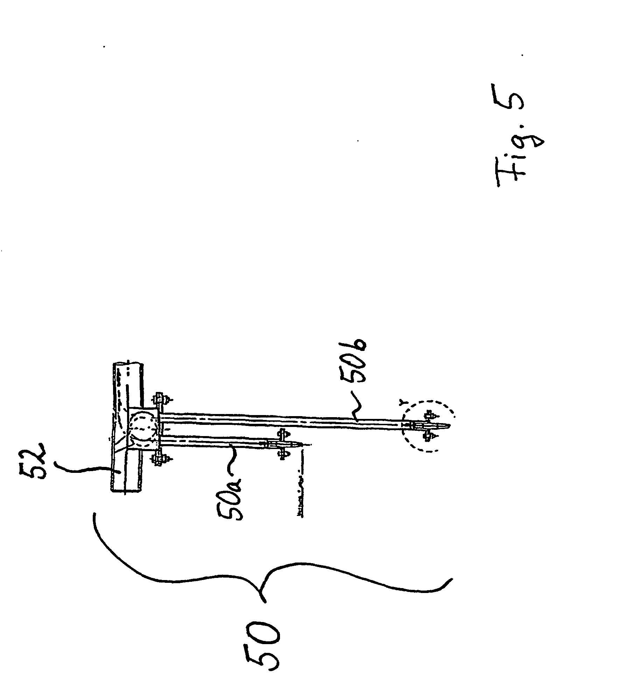

Fig. 5 zeigt eine Detailansicht zweier Thermoelemente 50 einer Heizzone 36. Es ist zu erkennen, dass die beiden Thermoelemente 50a und 50b unterschiedlich weit von dem zentralen Messbalken 52 beabstandet sind, so dass sie unterschiedlich weit in das Gemisch hineinragen.

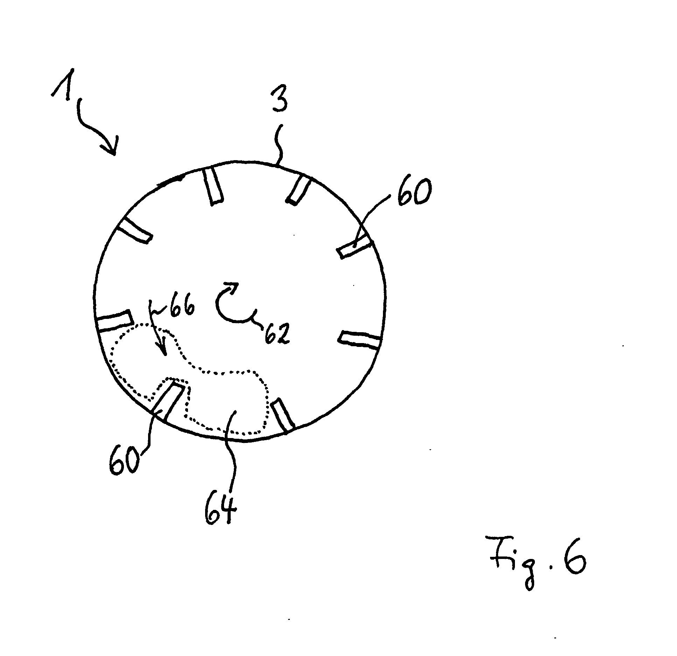

Fig. 6 zeigt eine schematische Detailansicht von Leisten 60 in dem Drehrohrofen 1 der Fig. 1. Der Ofen 1 rotiert gemäß Pfeil 62. Die Leisten 60 verhindern einen Überschlag des Gemisches 64 während der Rotation des Drehrohrofens 1. Während der Rotation des Drehrohrofens 1 rutscht das Gemisch 64 vielmehr wegen der Leisten 60 immer wieder gemäß Pfeil 66 zurück, ohne sich zu überschlagen.

Die Arbeitsweise des dargestellten Drehrohrofens 1 wird nachstehend beschrieben. Diese Arbeitsweise bildet einen Teil der vorliegenden Erfindung. Dabei bleibt das Richten von Ansprüchen auf die Einzelheiten dieser Arbeitsweise vorbehalten.

Der indirekt beheizte Drehrohrofen 1 dient zur Aufbereitung des Gemisches 64 (hier recyceltes PET-Malgut), welches dem Produktraum 5 im vorgetrocknetem Zustand (Restfeuchte max. 0,4 Masse -% Wasser) zugeführt wird. Das Aufgabematerial enthält zudem NaOH (max. 10 Masse -% an 50%-iger NaOH), welches mit dem PET unter den Temperaturbedingungen im Drehrohrofen 1 oberflächlich reagiert - es entsteht ein PET-Granulat, welches nach weiteren Verfahrensschritten wieder für die Herstellung von Lebensmittelverpackungen geeignet ist. Die Zulassung zur Verwendung in Lebensmittelverpackungen ist daran gebunden, dass die PET-Verweilzeit oberhalb 400 K mindestens zwei Stunden beträgt.

Während der Inbetriebnahme des Ofens 1 sollte zunächst das Stemwehr 22 an die verfahrenstechnischen Gegebenheiten angepasst werden. Hierzu ist es wichtig zu wissen, dass die Funktion des Konstanthaltens der Produktverweilzeit (im beheizten Ofenbereich) unabhängig von der Produktdurchsatzleistung nur dann in absolut idealer Weise realisiert wird, solange das mechanische Produktverhalten sowie die Ofendrehzahl und -neigung konstant gehalten werden. Das mechanische Produktverhatten wird (unabhängig von der Durchsatzleistung) im wesentlichen dann konstant bleiben, wenn die Korngrößenverteilung und die globale Partikelform des PET-Mahlgutes sich nicht ändern. Die Einstellung des Stemwehres 22 erfolgt durch Öffnen bzw. Verschließen der parabelförmigen Durchtrittsöffnungen 26 im Stemwehr 22 - hierfür sind für insgesamt 12 Öffnungen 26 die einschraubbaren Verschlussbleche 30 vorhanden.

Die Einstellarbeiten sollten im kalten Ofenzustand bevorzugt nach folgendem Plan durchgeführt werden:

Start mit sechs geöffneten Einschnitten 26, der bevorzugten Ofendrehzahl (Vorschlag 4 min⁻¹) sowie fester (z.B. der halben) Durchsatzleistung repräsentativem Aufgabematerials.

Abwarten des stationären Betriebszustandes (10 - 15 Stunden) und Kontrolle des Produktfüllstandes am Stemwehr 22 bei stehendem Ofen 1. Vermutlich wird der vorliegende Füllstand bei dieser ersten Kontrolle noch nicht dem Sollfüllstand für die gewählte Durchsatzleistung entsprechen. Ist er zu niedrig sind einige Einschnitte 26 zu verschließen; ist er zu hoch sind weitere Öffnungen 26 freizugeben - die entsprechende Anzahl ist mittels eines einfachen Dreisatzes rechnerisch zu ermitteln.

Erneuter Start des Ofenantriebes und der Produktaufgabe mit den oben gewählten Einstellungen. Nach erneutem Abwarten des stationären Betriebszustandes (ca. 10 Stunden) ist der Produktfüllstand am Stemwehr 22 bei stehendem Ofen 1 nochmals zu überprüfen - nun sollten der Soll- und Istwert übereinstimmen (falls nicht, ist eine erneute Anpassung notwendig).

Falls es für notwendig erachtet wird, kann eine Überprüfung darüber angeschlossen werden, ob die Verhältnisse auch bei veränderten Durchsatzleistungen korrekt sind.

Ebenfalls sinnvoll kann eine Überprüfung des Einflusses einer Drehzahlvariation sein, so dass evt. vorhandene Unzulänglichkeiten der Funktion des Stemwehres 22 (z.B. bei veränderter Komgrößenverteilung in Abhängigkeit von der Durchsatzleistung) durch eine (geringfügige) Drehzahlanpassungen kompensiert werden können.

Sollte irgendwann ein genereller Wechsel der Produktqualität anstehen, so ist das Stemwehr 22 für dieses Produkt neu einzustellen - gleiches gilt bei einem generellen Wechsel der standardmäßigen Ofendrehzahl oder nach einem Verändern der Ofenneigung.

Nachdem die Einstellarbeiten am Stemwehr 22 abgeschlossen sind (und ggf. der Ofen 1 komplett lehrgefahren wurde), kann mit dem Aufheizen begonnen werden.

Hierfür sind folgende Informationen wichtig:

Zur Überwachung stehen für jede Temperaturregelzone 36 ein Strahlungspyrometer 48 zur berührungslosen Messung der Trommelwandtemperatur, zwei Doppelthermoelemente 50 zur Messung der Produkttemperatur (700 mm bzw. 200 mm Abstand zur Trommelwand 3) sowie mehrere Doppelthermoelemente zur Übertemperatur-Überwachung der elektrischen Heizelemente zur Verfügung.

Die Messung der Produkttemperatur erfolgt (wie oben angegeben) in zwei unterschiedlichen Abständen zur Trommelwand 3, d.h. 1 x hoch in der Produktschüttung und 1 x tief in der Produktschüttung. Die tiefliegenden Messpunkte werden immer produktberührt sein, sofern der Ofenfüllgrad über 3,5% beträgt; bei den hochliegenden Messpunkten ist dieses erst bei Füllgraden über 21,5% der Fall. Es sei angemerkt, dass die hochliegenden Messpunkte teilweise nicht die Produkttemperatur, sondem die Gastemperatur anzeigen.

Die Heizleistung kann für jede Temperaturregelzone stufenlos von Null bis Maximum, bevorzugt individuell angepasst an die jeweiligen Anforderungen, eingestellt werden. Die Regelung der jeweiligen Heizleistung erfolgt automatisch über Eingabe der Trommelmantel-Solltemperatur je Regelzone 36 und Messung der Trommelmantel-Isttemperatur mittels der Strahlungspyrometer 48.

Die Heizleistung ist jeweils begrenzt durch die Überwachung der maximal zulässigen Heizelemente-Temperatur mittels der o.g. Doppelthermoetemente.

Es ist bei der Wahl der Trommelwandtemperaturen zu bedenken, dass PET einen Schmelzpunkt von ca. 250°C besitzt (durch Verunreinigungen bedingt sind auch niedrigere Werte möglich). Praktische und theoretische Untersuchungen haben ergeben, dass für Produkttemperaturen unterhalb 180°C mit Trommelmanteltemperaturen bis max. 280°C gearbeitet werden kann, ohne dass es zum Anschmelzen von Produkt am Trommelmantel 3 kommt - Bedingung hierfür ist jedoch eine ausreichend schnelle Durchmischung des Produktes 64; es wird deshalb empfohlen, mit mindestens 4 min⁻¹ Trommeldrehzahl zu fahren. Oberhalb 180°C Produkttemperatur sollte die Trommelwandtemperatur unterhalb des Schmelzpunktes (d.h. <250°C) eingestellt werden; oberhalb 220°C Produkttemperatur sollte die Wandtemperatur zur Sicherheit auf < 230°C heruntergesetzt werden (wegen eines evt. niedrigeren Schmelzpunktes durch Verunreinigungen im PET). Als Maßstab für die relevanten Produkttemperaturen sollten hierbei grundsätzlich die Anzeigen der tiefliegenden Messpunkte (s.o.) herangezogen werden.

Um eine Hydrolyse des PET bei hohen Temperaturen zu verhindern, wird der Produktraum 5 mit getrockneter (und auf 220°C vorgeheizter) Heiß-Luft durchströmt - damit die im Einfallbereich verdampfte Restfeuchte nicht Kontakt mit dem weiter aufgeheizten PET im Ausfallbereich bekommt, wird die Luft im Gegenstrom zum Produkt durch den Ofen 1 geführt. Eine besondere Bedeutung kommt in diesem Zusammenhang den Burgmann-Dichtungen zu, welche den Übergang zwischen dem rotierenden Drehofenmantel 3 und den feststehenden Ein- und Ausfallgehäusen 38 und 40 bilden. Es sollte vermieden werden, dass an diesen Stellen Umgebungsluft in den Produktraum 5 eintritt bzw. Staub oder Gase aus dem Ofen 1 austreten. Damit dieses zuverlässig gewährleistet werden kann, sollten die Burgmann-Dichtungen ebenfalls mit getrockneter (und auf 220°C vorgeheizter) Luft beaufschlagt werden. Der Vordruck dieser Luftbeaufschlagung sollte so groß gewählt werden, dass keine Prozessgase in die Burgmann-Dichtung hineingedrückt werden und dass Staub von den Dichtflächen ferngehalten ("weggeblasen") wird - grundsätzlich ist dieses am einfachsten und sichersten dann zu realisieren, wenn der Produktraum 5 in einem leichten Unterdruck gehalten wird (-0,1 bis -1 mbar). Es ist erwünscht, den Volumenstrom der Luftbeaufschlagung zu begrenzen - eine Kontrolle darüber ist jeweils mittels einer Vorort-Volumenstromanzeige und einem Stellventil gegeben.

Bei Ausfallen des Ofenhauptantriebes (z.B. durch einen Schaden am Motor oder durch einen Stromausfall) sollte dafür Sorge getragen werden; dass (solange der Ofenmantel 3 heiß ist) ein Notantrieb zum Einsatz kommt (z.B. Hilfsmotor auf Notstromschiene) und dass die Beheizungseinrichtung 49 abgeschaltet wird.

Das (langsame) Weiterdrehen des Ofens 1 ist erforderlich, um ein Ankleben von Produkt am Ofenmantel zu verhindern. Diese Maßnahmen sind bevorzugt Teil einer Anlagenverriegefung und sollten automatisch erfolgen.

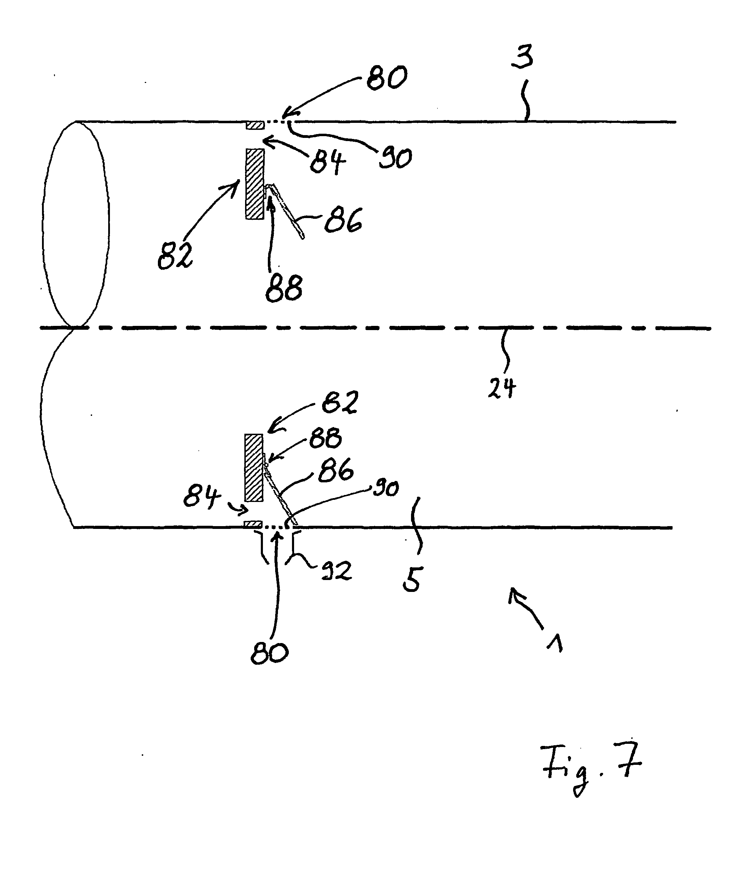

Fig. 7 zeigt eine schematische Detailansicht von Öffnungen 80 in dem Drehrohrofen 1 der Fig. 1. Die Öffnungen 80 führen queraxial durch den Mantel 3 nach außen. Der Hohlraum 5 weist benachbart zu der Öffnung 80 ein zweites Wehr 82 auf. Das zweite Wehr 82 ist stromaufwärts von der Öffnung 80 angeordnet. Das zweite Wehr 82 weist ein benachbart zu der Öffnung 80 und benachbart zu der Außenwand 3 des Hohlraumes 5 angeordnetes Durchtrittsloch 84 auf.

Weiterhin ist ein zumindest temporär im wesentlichen auf die Öffnung 80 zu führendes, als Blech ausgebildetes Ablenkmittel 86 vorgesehen. Das Blech 86 schwenkt schwerkraftgetrieben um eine Schwenkachse 88, wobei die Schwenkachse 88 so an dem zweiten Wehr 82 angeordnet ist, dass das Blech 86 stromabwärts hinter dem Durchtrittsloch 84 nur dann auf die Öffnung 80 zu führt, wenn sich der Hohlraum 5 bei Drehung des Drehrohrofens 1 im unteren Totpunkt einer Umdrehung befindet. Dies ist im unteren Teil der Fig. 7 dargestellt.

Zusätzlich ist die Öffnung 80 zumindest teilweise von einem als Siebeinrichtung dienendem Sieb 90 abgedeckt, wobei die Öffnung 80 zu einer Auffangeinrichtung 92 für durch die Öffnung 80 tretendes Material führt.

Die Funktion der Öffnung 80 ist wie folgt:

Befindet sich Material im unteren Bereich des Drehrohrofens 1 ist die Klappe 86 durch die Schwerkraft geschlossen. Grobkömiges Material gelangt über das Wehr 82 und entmischtes feinkörniges Material, sogenanntes Unterkorn, gelangt durch die unteren Öffnungen 82 nach außen. Nach Austritt des feinkörnigen Materials erfolgt eine Absiebung durch den ringförmig auf dem Ofenumfang 3 angebrachten Siebbelag 90. Der Siebbelag 90 muss nicht zwingend durchgängig sein. Das Unterkom dieser Siebung wird durch die Auffangeinrichtung 92 separiert. Das auf dem Siebbelag 90 verbliebene Oberkorn wird von dem vorbeigleitenden Material mittransportiert. Die Öffnung 80 bietet also die Möglichkeit der Abtrennung von Unterkorn durch die Installation der vorgeschalteten kleineren Wehre 82. Soll mit dem Drehrohrofen 1 PET gereinigt werden, so handelt es sich bei dem Unterkom um Salze und PET-Feinkom, die dank der Öffnungen abgeschieden werden können, was die Qualität des Endproduktes erhöht.

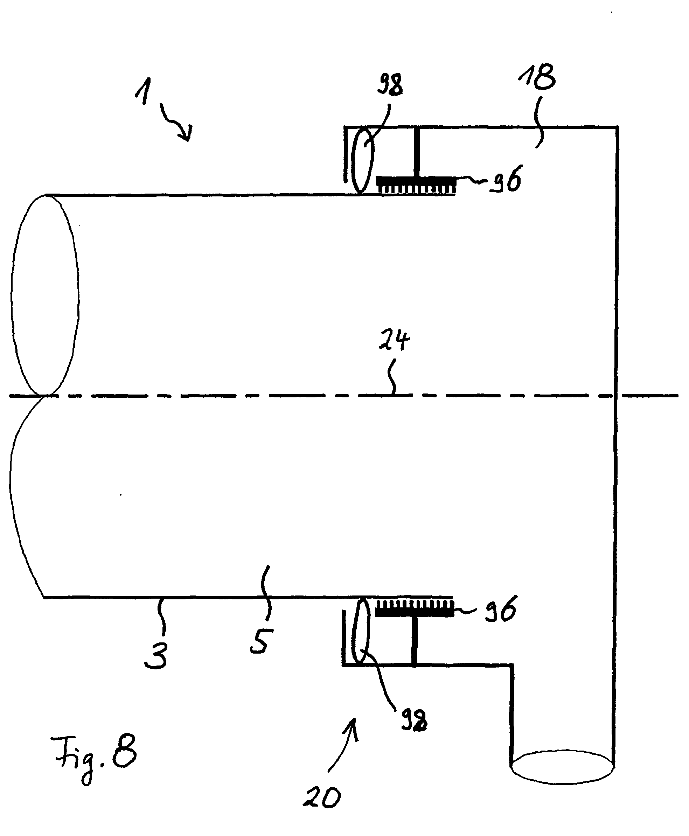

Fig. 8 zeigt eine schematische Detailansicht von Bürsten 90 in dem Drehrohrofen 1 der Fig. 1. Der Übergang 20 zwischen Drehrohrofen 1 und Gemischauslaufzylinder 18 weist zwei Bürsten 90 zum Abbürsten von in den Übergang 20 eindringendem Material auf. Durch die Bürsten 90 wird verhindert, dass sich Stäube an dieser Stelle anlagem, da an die Dichtung 92 zwischen Gemischauslaufzylinder 18 und Drehrohr 1 eindringende Stäube ständig abgebürstet werden. Die Bürsten 90 sind so gedreht, dass in den Übergang 20 eindringendes Material zurück zu dem Gemischauslaufzylinder 18, weg von einer Dichtung 92, also in den Gemischauslaufzylinder 18, gebürstet wird. Von dort aus werden die Stäube entweder durch die Luftabsaugung oder mit dem Materialfluss ausgetragen.

## Patentansprüche

1. Vorrichtung zur Reinigung und/oder Dekontamination von Polyester, mit einem mit einem Gemisch (64) aus Polyester und einem alkalischen Material zu speisenden, zumindest teilweise beheizten Drehrohrofen (1) zur Durchführung einer Verseifungsreaktion in dem Gemisch (64),
wobei innerhalb des Drehrohrofens (1) mindestens ein das Innere (5) des Drehrohrofens (1) zumindest teilweise verschließendes Wehr (22) angeordnet ist,
wobei das Wehr (22) mindestens eine Durchtrittsöffnung (26) aufweist, welche zumindest teilweise mit mindestens einer Abdeckung (30) abdeckbar ist, um den Füllungsgrad des Drehrohrofens (1) durch Variation der Aufstauwirkung des Wehrs (22) zu variieren,
wobei das Wehr (22) sternförmig von der Mitte des Wehrs (22) ausgehende Durchtrittsöffnungen (26) aufweist,
**dadurch gekennzeichnet, dass** die Durchtrittsöffnungen (26) derart zumindest teilweise mit der Abdeckung (30) abdeckbar sind, dass sie den Füllungsgrad des Drehrohrofens durch Variation der Aufstauwirkung des Wehrs in einer 5 % Staffelung des Füllungsgrades von 0 bis etwa 30 % variieren.

2. Vorrichtung nach Anspruch 1,
wobei das Wehr (22) im Bereich des stromabwärts gelegenen Endes des beheizten Ofenbereiches angeordnet ist.

3. Vorrichtung nach einem der vorstehenden Ansprüche,
wobei das Wehr (22) 10 bis 14, bevorzugt 12, sternförmig von der Mitte des Wehrs (22) ausgehende Durchtrittsöffnungen (26) aufweist.

4. Vorrichtung nach dem vorstehenden Anspruch,
wobei die Durchtrittsöffnungen (26) derart zumindest teilweise mit der Abdeckung (30) abdeckbar sind, dass sie den Füllungsgrad des Drehrohrofens durch Variation der Aufstauwirkung des Wehrs in einer 5 %-Staffelung des Füllungsgrades von 0 % bis etwa 50 % variieren.

5. Vorrichtung nach einem der vorstehenden Ansprüche,
wobei die mindestens eine Abdeckung (30) eine Irisblende aufweist.

6. Vorrichtung nach dem vorstehenden Anspruch,
wobei die Irisblende stufenlos verstellbar ist.

7. Vorrichtung nach einem der beiden vorstehenden Ansprüche,
wobei die Irisblende von außerhalb des Drehrohrofens (1) verstellbar ist.

8. Vorrichtung nach einem der vorstehenden Ansprüche,
wobei der Drehrohrofen (1) in seinem Inneren einen im wesentlichen zylinderförmigen Hohlraum (5) zur Aufnahme des Gemisches (64) bildet.

9. Vorrichtung nach dem vorstehenden Anspruch,
wobei der Hohlraum (5) mindestens eine im wesentlichen queraxial nach außen führende Öffnung (80) aufweist.

10. Vorrichtung nach dem vorstehenden Anspruch,
wobei der Hohlraum (5) mindestens ein im wesentlichen benachbart zu der Öffnung (80) angeordnetes zweites Wehr (82) aufweist.

11. Vorrichtung nach dem vorstehenden Anspruch,
wobei das zweite Wehr (82) im wesentlichen stromaufwärts von der Öffnung (80) angeordnet ist.

12. Vorrichtung nach dem vorstehenden Anspruch,
wobei das zweite Wehr (82) ein im wesentlichen benachbart zu der Öffnung (80), bevorzugt auch benachbart zu einer Außenwand (3) des Hohlraumes (5), angeordnetes Durchtrittsloch (84) aufweist.

13. Vorrichtung nach einem der Ansprüche 9-12,
wobei ein zumindest temporär im wesentlichen auf die Öffnung (80) zu führendes Ablenkmittel (86) vorgesehen ist.

14. Vorrichtung nach dem vorstehenden Anspruch,
wobei das Ablenkmittel (86) im wesentlichen nur im unteren Totpunkt einer Umdrehung des Hohlraumes (5) auf die Öffnung (80) zu führt.

15. Vorrichtung nach dem vorstehenden Anspruch,
wobei das Ablenkmittel (86), bevorzugt schwerkraftgetrieben, um eine Schwenkachse (88) schwenkbar ist.

16. Vorrichtung nach Anspruch 12 und nach dem vorstehenden Anspruch,
wobei die Schwenkachse (88) so an dem zweiten Wehr (82) angeordnet ist, dass das Ablenkmittel (86) stromabwärts hinter dem Durchtrittsloch (84) im wesentlichen nur dann auf die Öffnung (80) zu führt, wenn sich der Hohlraum (5) im unteren Totpunkt einer Umdrehung befindet

17. Vorrichtung nach einem der Ansprüche 9-16,
wobei die Öffnung (80) zumindest teilweise von einer Siebeinrichtung (90) abgedeckt ist

18. Vorrichtung nach einem der Ansprüche 9-17,
wobei die Öffnung (80) zu einer Auffangeinrichtung (92) für durch die Öffnung (80) tretendes Material führt.

19. Vorrichtung nach einem der vorstehenden Ansprüche,
wobei der Drehrohrofen (1) auf seiner Innenoberfläche mindestens eine axial ausgerichtete Leiste (60) aufweist.

20. Vorrichtung nach dem vorstehenden Anspruch,
wobei 5 bis 20, bevorzugt 12, entlang des Umfanges gleichmäßig verteilte, axiale Leisten (60) vorgesehen sind.

21. Vorrichtung nach einem der Ansprüche 8, 19 oder 20,
wobei die mindestens eine axial ausgerichtete Leiste (60) sich derart weit radial nach innen in den Innenraum (5) des Drehrohrofens (1) erstreckt, das im gesamten Drehzahlbereich des Drehrohrofens (1) ein Überschlag des Gemisches (64) in dem Drehrohrofen (1) verhindert wird.

22. Vorrichtung nach einem der vorstehenden Ansprüche,
wobei der Drehrohrofen (1) einen Durchmesser von 2 m bis 4 m, bevorzugt 2,6 m, und eine beheizte Länge von 15 m bis 25 m, bevorzugt 18 m, aufweist.

23. Vorrichtung nach einem der vorstehenden Ansprüche,
wobei der Drehrohrofen (1) zur Aufnahme des Gemisches (64) einen Gemischeinlaufzylinder mit einem Durchmesser von 0,5 m bis 1,5 m, bevorzugt 0,8 m, aufweist.

24. Vorrichtung nach einem der vorstehenden Ansprüche,
wobei der Drehrohrofen (1) zur Ausgabe des Gemisches (64) einen Gemischauslaufzylinder (18) mit einem Durchmesser von 1 m bis 3 m, bevorzugt 1,8 m, aufweist.

25. Vorrichtung nach einem der Ansprüche 23 oder 24,
wobei der Gemischeinlaufzylinder (14) und/oder der Gemischauslaufzylinder (18) mit einem, bevorzugt konischen, Übergang (16; 20) mit dem Drehrohrofen (1), bevorzugt über eine Dichtung (98), verbunden ist.

26. Vorrichtung nach dem vorstehenden Anspruch,
wobei der Übergang (16; 20) zwischen Drehrohrofen (1) und Gemischeinlaufzylinder (14) und/oder Gemischauslaufzylinder (18) mindestens ein Bürstenmittef (96) zum Abbürsten von in den Übergang (16; 20) eindringendem Material aufweist.

27. Vorrichtung nach dem vorstehenden Anspruch,
wobei das Bürstenmittel mindestens ein, bevorzugt eine Bürste (96) umfassendes, Reinigungselement aufweist, das so ausgebildet ist, dass in den Übergang (16; 20) eindringendes Material zurück in den Gemischeinlaufzylinder (14) und/oder den Gemischauslaufzylinder (18), bevorzugt weg von der Dichtung (98), befördert wird.

28. Vorrichtung nach einem der vorstehenden Ansprüche,
wobei der Drehrohrofen (1) innerhalb des Gemischauslaufzylinders (18) Förderspiralen zur Förderung des Gemisches (64) aufweist.

29. Vorrichtung nach einem der vorstehenden Ansprüche,
wobei an den Enden des Gemischeinlaufzylinders (14) und/oder des Gemischauslaufzylinders (18) Flansche zur Aufnahme von Abdichtungen zur luftdichten Abdichtung des Drehrohrofens (1) angeordnet sind.

30. Vorrichtung nach einem der vorstehenden Ansprüche,
wobei der Drehrohrofen (1) in seinem Inneren, bevorzugt etwa sechs, Schöpftaschen aufweist, welche das Produkt den auslaufseitigen Konus in den Gemischauslaufzylinder (18) hinauffördem.

31. Vorrichtung nach einem der vorstehenden Ansprüche,
wobei der Drehrohrofen (1) zum mechanischen Transport des Gemisches (64) eine Neigung gegenüber der Horizontalen aufweist.

32. Vorrichtung nach einem der vorstehenden Ansprüche,
wobei der Drehrohrofen (1) an einem ausfallseitigen Ende ein Schwenklager aufweist, so dass der Drehrohrofen (1) durch einfallseitiges Anheben und Verschwenken des Drehrohrofens (1) um dieses Schwenklager in die Neigung verschwenkbar ist.

33. Vorrichtung nach einem der vorstehenden Ansprüche,
wobei die Neigung 10 mm/m bis 20 mm/m, bevorzugt 15 mm/m, beträgt

34. Vorrichtung nach einem der vorstehenden Ansprüche,
wobei innerhalb des Drehrohrofens (1), bevorzugt 5 bis 20, weiter bevorzugt 10, Thermoelemente (50, 50a, 50b) zur Überwachung der Gemischtemperatur in dem Drehrohrofen (1) vorgesehen sind, welche Thermoelemente an einem relativ zu dem Drehrohrofen (1) feststehenden Messbalken (52) innerhalb des Drehrohrofens (1) befestigt sind.

35. Vorrichtung nach dem vorstehenden Anspruch,
wobei pro Heizzone (36) zwei Thermoelemente (50, 50a, 50b) vorgesehen sind.

36. Vorrichtung nach einem der vorstehenden Ansprüche,
wobei an einem axialen Punkt des Drehrohrofens (1) jeweils zwei Thermoelemente (50, 50a, 50b) vorgesehen sind, die unterschiedlich beabstandet zur Drehachse (24) des Drehrohrofens (1) innerhalb des Drehrohrofens (1) vorgesehen sind.

37. Vorrichtung nach einem der vorstehenden Ansprüche,
wobei der Drehrohrofen (1) zwei bis fünf, bevorzugt drei, Prozesszonen entlang seiner Längsachse (24) aufweist.

38. Vorrichtung nach dem vorstehenden Anspruch,
wobei die Ausgestaltung, die Länge und die Temperatur der ersten Prozesszone derart ist, dass eine weitere Vortrocknung des Gemisches (64) vornehmbar ist, bevorzugt von 0,8 % bis 0,2 %, bevorzugt 0,4 %, Wassergehalt auf 100 ppm bis 50 ppm, bevorzugt 80 ppm, Wassergehalt.

39. Vorrichtung nach einem der beiden vorstehenden Ansprüche,
wobei die Ausgestaltung, die Länge und die Temperatur der zweiten Prozesszone derart ist, dass eine Oberflächenreaktion zur teilweisen Verseifung des Gemisches (64) stattfindet.

40. Vorrichtung nach einem der drei vorstehenden Ansprüche,
wobei die Ausgestaltung, die Länge und die Temperatur der dritten Prozesszone (64) derart ist, dass eine Diffusionsreaktion zur Entfernung von aromatischen Verunreinigungen in dem Gemisch (64) stattfindet.

41. Vorrichtung nach einem der vorstehenden Ansprüche,
wobei in dem Drehrohrofen (1) mindestens drei, bevorzugt fünf, weiter bevorzugt gleichlange, Heizzonen (36) vorgesehen sind.

42. Vorrichtung nach einem der vorstehenden Ansprüche,
wobei außerhalb des Drehrohrofens (1) angeordnete Heizstrahler (49) vorgesehen sind, mit deren Hilfe der Drehrohrofen (1) von außen beheizbar ist, so dass eine indirekte Beheizung des Gemisches (64) in dem Drehrohrofen (1) erzeugbar ist.

43. Vorrichtung nach einem der vorstehenden Ansprüche,
wobei der Drehrohrofen (1) eine Heißluftöffnung (70) zum Einströmen von Heißluft in das Innere des Drehrohrofens (1) aufweist, bevorzugt eine zweite Öffnung (72) zum Ausströmen der verbrauchten Heißluft aufweist.

44. Vorrichtung nach dem vorstehenden Anspruch,
wobei ein Heißlufterzeuger zum Erzeugen der Heißluft vorgesehen ist, deren Temperatur der Temperatur im Inneren des beheizten Drehrohrofens (1) im wesentlichen entspricht.

45. Vorrichtung nach einem der vorstehenden Ansprüche,
wobei ein Heißlufttrockner zum Trocknen der für das Innere des Drehrohrofens (1) vorgesehenen Heißluft vorgesehen ist.

46. Vorrichtung nach einem der vorstehenden Ansprüche,
wobei in dem Drehrohrofen (1) eine, bevorzugt aus, weiter bevorzugt trockener, Heißluft bestehende, Gegenluftströmung entgegen der Bewegungsrichtung des Gemisches mit Hilfe eines Gebläses erzeugbar ist.

47. Vorrichtung nach einem der vorstehenden Ansprüche,
wobei ein Mischer (74) zum Mischen des Gemisches vor Eintritt in den Drehrohrofen (1) vorgesehen ist, welcher Mischer (74) bevorzugt eine geheizte Mischschnecke (76) aufweist.

48. Vorrichtung nach dem vorstehenden Anspruch,
wobei dem Mischer (74) ein Vortrockner zum Trocknen des für den Mischer (74) vorgesehenen Polyesters vorschaltet ist.

49. Vorrichtung nach dem vorstehenden Anspruch,
wobei die Heizleistung des Vortrockners zur Trocknung des Inhalts des Vortrockners größer ist als die Lüftungsleistung des Vortrockners zur Trocknung des Inhalts des Vortrockners.

50. Vorrichtung nach einem der beiden vorstehenden Ansprüche,
wobei in dem Vortrockner eine Gegenluftströmung gegen die Bewegungsrichtung des zu trocknenden Gutes in dem Vortrockner erzeugbar ist.

## Claims

1. Apparatus for cleaning and/or decontaminating polyester, having a rotary drum-type furnace which is at least partly heated and is to be fed with a mixture (64) of polyester and an alkaline material in order to carry out a saponification reaction in the mixture (64), wherein at least one weir (22) at least partially closing the interior of the drum-type furnace (1) is disposed inside the furnace (1), wherein the weir (22) has at least one through aperture (26), which may b covered at least in part by at least one cover (30) in order to vary the fill level of the furnace (1) by varying the damming effect of the weir (22), wherein the weir (22) has through apertures (26) extending in a star shape from the centre of the weir (22), **characterised in that** the through apertures (26) may be so covered at least partly with the cover (30) that they vary the fill level of the furnace by varying the damming effect of the weir in 5% gradations of the fill level from 0 to 30%.

2. Apparatus according to claim 1, wherein the weir (22) is disposed in the region of the upstream end of the heated furnace region.

3. Apparatus according to one of the preceding claims, wherein the weir (22) has 10 to 14, preferably 12, through apertures (26) extending in a star from the centre of the weir (22).

4. Apparatus according to one of the preceding claims, wherein the through apertures (26) may be so covered at least partly with the cover (30) that they vary the fill level of the furnace by varying the damming effect of the weir in 5% gradations of the fill level from 0 to 30%.

5. Apparatus according to one of the preceding claims, wherein the cover (30) of which there is at least one is an iris.

6. Apparatus according to the preceding claim, wherein the iris is infinitely adjustable.

7. Apparatus according to one of the preceding claims, wherein the iris is adjustable from outside the drum-type furnace (1).

8. Apparatus according to one of the preceding claims, wherein the furnace (1) forms in its interior a substantially cylindrical cavity (5) for receiving the mixture (64).

9. Apparatus according to the preceding claim, wherein the cavity (5) has at least one aperture (80) leading substantially transversely axially outwards.

10. Apparatus according to the preceding claim, wherein the cavity (5) has at least one second weir (82) disposed substantially adjacent to the aperture (80).

11. Apparatus according to the preceding claim, wherein the second weir (82) is disposed substantially upstream of the aperture (80).

12. Apparatus according to the preceding claim, wherein the second weir (82) has a through hole (84) disposed substantially adjacent to the aperture (80), preferably also adjacent to an outer wall (3) of the cavity (5).

13. Apparatus according to one of claims 9-12, wherein a deflecting means (86) is provided at least temporarily substantially leading up to the aperture (80).

14. Apparatus according to the preceding claim, wherein the deflecting means (86) leads up to the aperture (80) substantially only in the lower dead centre of a revolution of the cavity (5).

15. Apparatus according to the preceding claim, wherein the deflecting means (86), preferably gravity-driven, is pivotable about a pivotal axis (88).

16. Apparatus according to claim 12 and the preceding claim, wherein the pivotal axis (88) is so disposed on the second weir (82) that the deflecting means (86) leads downstream behind the through hole (84) up to the aperture (80) substantially only when the cavity (5) is located in the lower dead centre of a revolution.

17. Apparatus according to one of claims 9-16, wherein the aperture (80) is covered at least partly by a filter device (90).

18. Apparatus according to one of claims 9-17, wherein the aperture (80) leads to a collecting device (92) for the material passing through the aperture (80).

19. Apparatus according to one of the preceding claims, wherein the drum-type furnace (1) has on its inner surface at least one axially aligned strip (60).

20. Apparatus according to the preceding claim, wherein 5 to 20, preferably 12 axial strips (60) are provided, distributed evenly over the circumference.

21. Apparatus according to one of claims 8, 19 or 20, wherein the axially aligned strip (60) of which there is at least one extends sufficiently far radially inwards into the interior (5) of the drum-type furnace (1) that a flashover of the mixture (64) in the drum-type furnace (1) is prevented throughout the rpm range of the drum-type furnace (1).

22. Apparatus according to one of the preceding claims, wherein the drum-type furnace (1) has a diameter of 2 m to 4 m, preferably 2.6 m, and a heated length of 15 m to 25 m, preferably 18 m.

23. Apparatus according to one of the preceding claims, wherein the drum-type furnace (1) has a mixture intake cylinder for receiving the mixture (64) having a diameter of 0.5 m to 1.5 m, preferably 0.8 m.

24. Apparatus according to one of the preceding claims, wherein the drum-type furnace (1) has a mixture outlet cylinder (18) for discharging the mixture (64) having a diameter of 1 m to 3 m, preferably 1.8 m.

25. Apparatus according to one of claims 23 or 24, wherein the mixture intake cylinder (14) and/or mixture outlet cylinder (18) is connected to a preferably conical transition (16; 20) to the drum-type furnace (1), preferably via a seal (98).

26. Apparatus according to the preceding claim, wherein the transition (16; 20) has between the drum-type furnace (1) and the mixture intake cylinder (14) and/or mixture outlet cylinder (18) at least one brushing means (96) for brushing off material penetrating into the transition (16; 20).

27. Apparatus according to the preceding claim, wherein the brushing means has at least one cleaning element which comprises preferably one brush and which is so formed that material penetrating into the transition (16; 20) is conveyed back into the mixture intake cylinder (14) and/or the mixture outlet cylinder (18), preferably away from the seal (98).

28. Apparatus according to one of the preceding claims, wherein the drum-type furnace (1) has inside the mixture outlet cylinder (18) conveying worms for conveying the mixture (64).

29. Apparatus according to one of the preceding claims, wherein flanges for receiving seals for air-tight sealing of the drum-type furnace (1) are disposed at the ends of the mixture inlet cylinder (14) and/or of the mixture outlet cylinder (18).

30. Apparatus according to one of the preceding claims, wherein the drum-type furnace (1) has in its interior preferably about six scoops, which convey the product the outlet-side cone into the mixture outlet cylinder (18).

31. Apparatus according to one of the preceding claims, wherein the drum-type furnace (1) has an incline relative to the horizontal for the mechanical conveying of the mixture (64).

32. Apparatus according to one of the preceding claims, wherein the drum-type furnace (1) has a pivot bearing at an outlet-side end so that the drum-type furnace (1) is pivotable into an inclined position by lifting at the inlet side and pivoting the drum-type furnace (1) about this pivot bearing.

33. Apparatus according to one of the preceding claims, wherein the incline is 10 mm/m to 20 mm/m, preferably 15 mm/m.

34. Apparatus according to one of the preceding claims, wherein inside the drum-type furnace (1), preferably 5 to 20, more preferably 10, thermal elements are provided for monitoring the mixture temperature in the drum-type furnace (1), which thermal elements are fixed to a measuring beam (52) which is fixed relative to the drum-type furnace (1).

35. Apparatus according to the preceding claim, wherein two thermal elements (50, 50a, 50b) are provided per heating zone (36).

36. Apparatus according to one of the preceding claims, wherein two thermal elements (50, 50a, 50b) are provided inside the drum-type furnace (1) at each axial point of the drum-type furnace (1) and are differently spaced relative to the rotary axis (24) of the drum-type furnace (1).

37. Apparatus according to one of the preceding claims, wherein the drum-type furnace (1) has two to five, preferably three, processing zones along its longitudinal axis (24).

38. Apparatus according to the preceding claim, wherein the confguration, length and temperature of the first processing zone are such that further pre-drying of the mixture (64) can be undertaken, preferably from 0.8% to 0.2%, preferably 0.4% water content to 100 ppm to 50 ppm, preferably 80 ppm water content.

39. Apparatus according to one of the two preceding claims, wherein the configuration, length and temperature of the second processing zone are such that a surface reaction takes place for partial saponification of the mixture (64).

40. Apparatus according to one of the three preceding claims, wherein the configuration, length and temperature of the third processing zone (64) are such that a diffusion reaction takes place to remove aromatic impurities in the mixture (64).

41. Apparatus according to one of the preceding claims, wherein at least three, preferably five heating zones (36) more preferably of equal length are provided in the drum-type furnace (1).

42. Apparatus according to one of the preceding claims, wherein radiant heaters (49) are provided outside the drum-type furnace (1), by means of which heaters the drum-type furnace (1) is heatable from outside so that indirect heating of the mixture (64) in the drum-type heater can take place.

43. Apparatus according to one of the preceding claims, wherein the drum-type furnace (1) has a hot-air aperture (70) to allow hot air to stream into the drum-type furnace (1), and preferably has a second aperture (72) for the used hot air to flow out.

44. Apparatus according to the preceding claims, wherein a hot-air generator is provided to generate the hot air, whose temperature substantially corresponds to that inside the heated drum-type furnace (1).

45. Apparatus according to one of the preceding claims, wherein a hot air dryer is provided to dry the hot air provided for the interior of the drum-type furnace (1).

46. Apparatus according to one of the preceding claims, wherein a counter-stream of air preferably consisting of hot, preferably dry, air may be generated in the drum-type furnace (1) and flows in the opposite direction to the movement of the mixture by means of a fan.

47. Apparatus according to one of the preceding claims, wherein a mixer (74) is provided for mixing the mixture before it enters the drum-type furnace (1), which mixer (74) preferably has a heated mixing screw (76).

48. Apparatus according to the preceding claim, wherein a pre-dryer is provided upstream of the mixer (74) for drying the polyester provided for the mixer (74).

49. Apparatus according to the preceding claim, wherein the heating power of the pre-dryer for drying the content of the pre-dryer is greater than the aeration power of the pre-dryer for drying the content of the pre-dryer.

50. Apparatus according to one of the two preceding claims, wherein a counter-stream of air may be generated in the pre-dryer and flow in the opposite direction to the movement of the product to be dried.

## Revendications

1. Dispositif pour le nettoyage et/ou la décontamination de polyester, avec un four tournant (1) au moins partiellement chauffé et devant être alimenté avec un mélange (64) à base de polyester et d'un matériau alcalin pour la réalisation d'une réaction de saponification dans le mélange (64), où au moins un déversoir (22) est aménagé à l'intérieur du four tournant (1), lequel déversoir ferme au moins partiellement l'intérieur (5) du four tournant (1), moyennant quoi le déversoir (22) présente au moins une ouverture de traversée (20) pouvant être au moins partiellement recouverte avec une couverture (30), afin de faire varier le taux de remplissage du four tournant (1) grâce à la variation de l'effet de retenue du déversoir (22), moyennant quoi le déversoir (22) présente des ouvertures de traversée (26) partant en forme d'étoile depuis le milieu du déversoir (22), **caractérisé en ce que** les ouvertures de traversée (26) peuvent être au moins partiellement recouvertes avec la couverture (30) de manière à faire varier le taux de remplissage du four tournant grâce à la variation de l'effet de retenue du déversoir avec une progression du taux de remplissage allant de 0 à environ 30%.

2. Dispositif selon la revendication 1, où le déversoir (22) est aménagé dans la zone de l'extrémité située en aval de la zone chauffée du four.

3. Dispositif selon l'une quelconque des revendications précédentes, où le déversoir (22) présente 10 à 14, et de préférence 12 ouvertures de traversée (26) partant en forme d'étoile depuis le milieu du déversoir (22).

4. Dispositif selon la revendication précédente, où les ouvertures de traversée (26) peuvent être au moins partiellement recouvertes par la couverture (30) de manière à faire varier le taux de remplissage du four tournant grâce à la variation de l'effet de retenue du déversoir avec une progression de 5% du taux de remplissage allant de 0% à environ 50%.

5. Dispositif selon l'une quelconque des revendications précédentes, où l'une au moins des couvertures (30) présente un diaphragme iris.

6. Dispositif selon la revendication précédente, où le diaphragme iris peut être réglé en continu.

7. Dispositif selon l'une quelconque des deux revendications précédentes, où le diaphragme iris peut être réglé depuis l'extérieur du four tournant (1).

8. Dispositif selon l'une quelconque des revendications précédentes, où le four tournant (1) forme dans son intérieur un espace creux (5) essentiellement de forme cylindrique pour la réception du mélange (64).

9. Dispositif selon la revendication précédente, où l'espace creux (5) présente au moins une ouverture (80) menant de manière essentiellement transversale et axiale vers l'extérieur.

10. Dispositif selon la revendication précédente, où l'espace creux (5) présente au moins un deuxième déversoir (82) essentiellement aménagé au voisinage de l'ouverture (80).

11. Dispositif selon la revendication précédente, où le deuxième déversoir (82) est aménagé essentiellement en amont de l'ouverture (80).

12. Dispositif selon la revendication précédente, où le deuxième déversoir (82) présente un trou de traversée (84) aménagé essentiellement au voisinage de l'ouverture (80), et de manière également préférée au voisinage d'une paroi extérieure (3) de l'espace creux (5).

13. Dispositif selon l'une quelconque des revendications 9-12, où est prévu un moyen de déviation (86) menant au moins temporairement essentiellement vers l'ouverture (80).

14. Dispositif selon la revendication précédente, où le moyen de déviation (86) mène essentiellement vers l'ouverture (80) seulement au point mort bas d'une rotation de l'espace creux (5).

15. Dispositif selon la revendication précédente, où le moyen de déviation (86), de préférence entraîné par la force de gravité, peut pivoter autour d'un axe de pivotement (88).

16. Dispositif selon la revendication 12 et selon la revendication précédente, où l'axe de pivotement (88) est aménagé sur le deuxième déversoir (82) de manière à ce que le moyen de déviation (86) en aval derrière le trou de traversée (84) mène essentiellement vers l'ouverture seulement lorsque l'espace creux (5) se trouve dans le point mort bas d'une rotation.

17. Dispositif selon l'une quelconque des revendications 9-16, où l'ouverture (80) est au moins partiellement recouverte par un dispositif de filtration (90).

18. Dispositif selon l'une quelconque des revendications 9-17, où l'ouverture (80) mène vers un dispositif collecteur (92) pour du matériau passant par l'ouverture (80).

19. Dispositif selon l'une quelconque des revendications précédentes, où le four tournant (1) présente sur sa surface interne au moins une nervure (60) orientée axialement.

20. Dispositif selon la revendication précédente, où 5 à 20, et de préférence 12 nervures (60) axiales réparties de manière égale le long de la périphérie, sont prévues.

21. Dispositif selon l'une quelconque des revendications 8, 19 ou 20, où au moins l'une des nervures (60) orientée axialement s'étend suffisamment loin radialement vers l'intérieur dans l'espace intérieur (5) du four tournant (1), pour qu'un culbutement du mélange (64) dans le four tournant soit empêché sur la totalité de la plage de vitesses de rotation du four tournant (1).

22. Dispositif selon l'une quelconque des revendications précédentes, où le four tournant (1) présente un diamètre de 2 m à 4 m, et de préférence de 2,6 m, et une longueur chauffée de 15 m à 25 m, et de préférence de 18 m.

23. Dispositif selon l'une quelconque des revendications précédentes, où le four tournant (1) présente un cylindre d'amenée du mélange avec un diamètre de 0,5 m à 1,5 m, et de préférence de 0,8 m, pour la réception du mélange (64).

24. Dispositif selon l'une quelconque des revendications précédentes, où le four tournant (1) présente un cylindre de délivrance du mélange (18) pour délivrer le mélange (64), d'un diamètre de 1 m à 3 m, et de préférence de 1,8 m.

25. Dispositif selon l'une quelconque des revendications 23 ou 24, où le cylindre d'amenée du mélange (14) et/ou le cylindre de délivrance du mélange (18) est relié à une transition (15, 20) de préférence conique avec le four tournant (1), et de préférence via une garniture d'étanchéité (98).

26. Dispositif selon la revendication précédente, où la transition (16, 20) entre le four tournant (1) et le cylindre d'amenée du mélange (14) et/ou le cylindre de délivrance du mélange (18) présente au moins un moyen de brossage (96) pour enlever à la brosse du matériau pénétrant dans la transition (16, 20).

27. Dispositif selon la revendication précédente, où le moyen de brossage présente au moins un élément de nettoyage comprenant de préférence une brosse (96), lequel est conçu de manière à ce que du matériau pénétrant dans la transition (16, 20) est renvoyé dans le cylindre d'amenée du mélange,et/ou le cylindre de délivrance du mélange (18), et est de préférence éloigné de la garniture d'étanchéité (98).

28. Dispositif selon l'une quelconque des revendications précédentes, où le four tournant (1) présente des spirales de transport pour le transport du mélange (64), à l'intérieur du cylindre de délivrance du mélange (18).

29. Dispositif selon l'une quelconque des revendications précédentes, où des brides sont disposées aux extrémités du cylindre d'amenée du mélange (14) et/ou du cylindre de délivrance du mélange (18), pour la réception de colmatages pour le colmatage hermétique du four tournant (1).

30. Dispositif selon l'une quelconque des revendications précédentes, où le four tournant (1) présente dans son intérieur de préférence environ six poches de puisage qui acheminent le produit vers le haut dans le cône du côté de sortie dans le cylindre de délivrance du mélange (18).

31. Dispositif selon l'une quelconque des revendications précédentes, où le four tournant (1) présente une inclinaison par rapport à l'horizontale pour le transport mécanique du mélange (64).

32. Dispositif selon l'une quelconque des revendications précédentes; où le four tournant (1) présente un palier d'articulation à une extrémité du côté de sortie, de sorte que le four tournant (1) peut être pivoté dans la position d'inclinaison grâce à un soulèvement du côté de pénétration et à un pivotement du four tournant (1) autour de ce palier d'articulation.

33. Dispositif selon l'une quelconque des revendications précédentes, où l'inclinaison est de 10 mm/m à 20 mm/m, et de préférence de 15 mm/m.

34. Dispositif selon l'une quelconque des revendications précédentes, où de préférence 5 à 20, et également de préférence 10 thermocouples (50, 50a, 50b) sont prévus à l'intérieur du four tournant (1) pour surveiller la température du mélange dans le four tournant (1), lesquels thermocouples sont fixés sur une barre de mesure (52) immobile par rapport au four tournant (1) à l'intérieur du four tournant (1).

35. Dispositif selon la revendication précédente, où deux thermocouples (50, 50a, 50b) sont prévus par zone de chauffage (36) .

36. Dispositif selon l'une quelconque des revendications précédentes, où respectivement deux thermocouples (50, 50a, 50b) sont prévus sur un point axial du four tournant (1), lesquels sont prévus avec différentes distances par rapport à l'axe de rotation (24) du four tournant (1) à l'intérieur du four tournant (1).

37. Dispositif selon l'une quelconque des revendications précédentes, où le four tournant (1) présente deux à cinq, et de préférence trois zones de processus le long de son axe longitudinal (24).

38. Dispositif selon la revendication précédente, où la forme, la longueur et la température de la première zone de processus est telle, qu'il est possible de procéder à un autre préséchage du mélange (64) avec de préférence une teneur en eau de 0,8% à 0,2%, et de préférence de 0,4%, sur 100 ppm à 50 ppm, et de préférence 80 ppm de teneur en eau.

39. Dispositif selon l'une quelconque des deux revendications précédentes, où la forme, la longueur et la température de la deuxième zone de processus est telle, qu'une réaction superficielle a lieu pour la saponification partielle du mélange (64).

40. Dispositif selon l'une quelconque des trois revendications précédentes, où la forme, la longueur et la température de la troisième zone de processus (64) est telle, qu'une réaction de diffusion à lieu pour l'élimination d'impuretés aromatiques dans le mélange (64).

41. Dispositif selon l'une quelconque des revendications précédentes, où au moins trois, et de préférence cinq zones de chauffage (36), et de préférence de même longueur, sont prévues dans le four tournant (1).

42. Dispositif selon l'une quelconque des revendications précédentes, où sont prévus des radiateurs (49) aménagés en-dehors du four tournant (1), à l'aide desquels le four tournant (1) peut être chauffé de l'extérieur, de sorte qu'il est possible de générer un échauffement indirect du mélange (64) dans le four tournant (1).

43. Dispositif selon l'une quelconque des revendications précédentes, où le four tournant (1) présente une ouverture d'air chaud (70) pour l'afflux d'air chaud à l'intérieur du four tournant (1), et de préférence une deuxième ouverture (72) pour le dégagement de l'air chaud utilisé.

44. Dispositif selon la revendication précédente, où un générateur d'air chaud pour générer de l'air chaud est prévu, dont la température correspond pour l'essentiel à la température à l'intérieur du four tournant (1).

45. Dispositif selon l'une quelconque des revendications précédentes, où un appareil de séchage à l'air chaud est prévu pour le séchage de l'air chaud prévu pour l'intérieur du four tournant (1).

46. Dispositif selon l'une quelconque des revendications précédentes, où il est possible de générer un courant d'air contraire en opposition au sens de déplacement du mélange à l'aide d'une soufflante à l'intérieur du four tournant (1), lequel courant d'air contraire se compose de préférence d'air chaud, et de manière également préférée, d'air chaud sec.

47. Dispositif selon l'une quelconque des revendications précédentes, où un mélangeur (74) est prévu pour mélanger le mélange avant l'entrée dans le four tournant (1), lequel mélangeur (74) présente de préférence une vis mélangeuse (76) chauffée.

48. Dispositif selon la revendication précédente, où un présécheur pour le séchage du polyester prévu pour le mélangeur (74) est monté en amont du mélangeur (74).

49. Dispositif selon la revendication précédente, où la puissance calorifique du présécheur pour le séchage du contenu du présécheur est supérieure à la puissance de ventilation du présécheur pour le séchage du contenu du présécheur.

50. Dispositif selon l'une quelconque des deux revendications précédentes, où il est possible de générer dans le présécheur un courant d'air contraire en opposition du sens de déplacement du matériau à sécher dans le présécheur.
